# FASCICULE DE BREVET EUROPEEN

(11) **EP 1 450 656 B1**
(45) Date de publication et mention de la délivrance du brevet: **11.07.2007**
(21) Numéro de dépôt: 02803054.2
(22) Date de dépôt: 14.11.2002
(51) Int. Cl.: A47J 31/40

(54) **DISPOSITIF DE PREPARATION D'UNE BOISSON PAR MELANGE DE PRODUITS SOLUBLES AVEC UN LIQUIDE**
VORRICHTUNG ZUR ZUBEREITUNG EINES GETRÄNKS DURCH MISCHEN LÖSLICHER PRODUKTE MIT EINER FLÜSSIGKEIT
DEVICE FOR PREPARING A BEVERAGE BY MIXING SOLUBLE PRODUCTS WITH A LIQUID

(30) Priorité: 14.11.2001 FR 0114759
(43) Date de publication de la demande: 01.09.2004
(73) Titulaire: Bergamelli, Patrick, 38730 Le Pin (FR); Dalliance, 93000 Bobigny (FR)
(72) Inventeur: BERGAMELLI, Patrick, F-38730 Le Pin (FR); ANTONINI, Gilbert, F-69003 LYON (FR)
(74) Mandataire: Hecké, Gérard
(86) Numéro de dépôt international: PCT/FR2002/003907
(87) Numéro de publication internationale: WO 2003/041546

(56) Documents cités:
- DE-A- 3 838 683
- FR-A- 2 780 261
- GB-A- 1 369 218
- US-A- 4 172 669
- US-A- 4 185 927
- US-A- 4 193 522
- US-A- 5 839 610
- US-A- 5 927 553

## Description

### Domaine technique de l'invention

L'invention est relative à un dispositif de préparation d'une boisson par mélange de produits solubles avec un liquide, et comprenant une enveloppe ayant :
- un premier orifice d'introduction des produits solubles,
- au moins une chambre de mixage dotée d'un deuxième orifice d'évacuation de la boisson après mélange interne des produits solubles avec le liquide,
- des moyens d'extraction de la vapeur engendrée lors de la phase de mixage avec un liquide chaud,
- et des moyens de raccordement fluidique et mécanique agencés sur la face arrière de l'enveloppe et destinés à être emboîtés dans des trous d'une platine de montage fixe.

### Etat de la technique

Ce type de dispositif est utilisé en particulier dans les appareils de distribution automatique de boissons pour mélanger ou mixer les produits solubles avec de l'eau chaude ou froide. L'action de mixage des produits solubles avec l'eau s'effectue dans la chambre de mixage, laquelle est généralement constituée par un assemblage de sous-ensembles de pièces démontables entre elles manuellement (voir document FR 2 780 261).

La maintenance et l'entretien d'une telle chambre de mixage nécessitent plusieurs manipulations complexes de démontage et de déconnexion qui rallonge le temps d'intervention de l'opérateur. Le temps est d'autant plus long que le dispositif comporte un plus grand nombre de chambres de mixage. Les actions de connexion et de déconnexion sont généralement réalisées en plusieurs manipulations distinctes. Les logements pour les embouts et conduits pour les liquides et vapeurs sont fixés directement et individuellement pour chaque chambre de mixage sur le châssis interne de l'appareil. Les tubes et tuyaux de circulation des liquides et vapeurs sont reliés sur la partie arrière de ces éléments, lesquels font saillie sur l'avant de la plaque. Les opérations de lavage sont fastidieuses à réaliser.

L'action d'extraction des vapeurs s'effectue d'une manière connue au moyen d'un aspirateur qui aspire les vapeurs selon un cheminement en chicane. Si la puissance d'aspiration est trop forte, une partie des poudres est aspirée avec les vapeurs, ce qui provoque l'encrassement du conduit d'aspiration. Lorsque la puissance d'aspiration est trop faible, une partie des vapeurs remontent vers l'entonnoir de distribution des poudres solubles, ce qui crée des colmatages et des bouchages du dispositif.

L'arrivée de l'eau s'opère classiquement dans une partie large constituant un bol mélangeur situé au-dessus de la chambre de mixage. La première phase de mélange entre les poudres solubles et l'eau est effectuée dans ce bol mélangeur. Le mélange s'écoule ensuite dans la chambre de mixage. Un tel agencement nécessite une certaine quantité d'eau pour entraîner la totalité des poudres, et pour rincer le bol mélangeur. Si la quantité d'eau est trop faible pour une dose prédéterminée de poudre, le débit de la queue de rinçage n'est pas suffisant pour opérer un lavage complet du bol mélangeur, et les poudres humidifiées créent en séchant des salissures susceptibles de former des bouchons avec des risques de débordement.

Le document US 5 927 553 se rapporte à un appareil de préparation de boissons dans lequel l'enveloppe est constituée par l'assemblage de différentes pièces. La maintenance et l'entretien d'une telle chambre de mixage nécessitent plusieurs manipulations complexes.
Le document US 4 172 669 décrit un appareil de préparation de boissons dans lequel l'enveloppe est fixée mécaniquement sur une platine de support. La maintenance est également difficile pour le nettoyage de l'ensemble.

### Objet de l'invention

Le but de l'invention consiste à remédier aux inconvénients précités, en réduisant le nombre et la complexité des manipulations lors de l'entretien ou de la maintenance du dispositif de préparation des boissons.

Le dispositif selon l'invention est caractérisé en ce que l'enveloppe est formée par un corps monobloc avec une ou une pluralité de chambres de mixage pour assurer en un seul mouvement de poussée, la connexion automatique des moyens de raccordement fluidique et mécanique à tous les organes d'extraction de vapeurs, d'alimentation du liquide, et d'accouplement mécanique.
Selon mode de réalisation préférentiel de l'invention, les moyens de raccordement mécanique comportent un système de fixation par encliquetage, et un accouplement mécanique à une turbine logée dans la chambre de mixage. La platine de montage est constituée par une pièce monobloc en matière plastique, et comporte une face d'appui antérieure inclinée vers l'arrière autorisant d'une part la remontée des vapeurs vers le conduit d'aspiration selon la direction verticale, et facilitant d'autre part l'écoulement du liquide vers la turbine et le point bas du deuxième orifice. L'arrivée du liquide dans l'enveloppe s'effectue au moyen d'un embout à travers un trou situé à l'entrée de la chambre de mixage. Le trou d'alimentation en liquide est agencé au voisinage d'une gorge de circulation délimitée par une lèvre de guidage destinée à canaliser le liquide vers le bas de la chambre de mixage selon un écoulement réparti concentriquement.

D'autres caractéristiques peuvent être utilisées individuellement ou en combinaison :
- le profil de la gorge de circulation diminue progressivement le long de son trajet descendant ;
- l'embout d'alimentation en liquide est situé entre le conduit d'aspiration et le système de fixation par encliquetage ;
- le système de fixation comporte deux doigts de retenue élastiques destinés à s'engager dans des trous de la platine ;
- les deux doigts de retenue entourent l'élément mené de l'accouplement mécanique avec la turbine.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue en coupe selon la ligne1-1 de la figure 2 d'un dispositif de préparation selon l'invention ;
- la figure 2 montre une vue en plan de la figure 1, le dispositif comprenant une seule chambre de mixage ;
- les figures 3 et 4 sont des vues identiques de la figure 2 de deux variantes de réalisation, respectivement avec deux et trois chambres de mixage ;
- la figure 5 représente une vue en élévation d'une platine de montage pour l'insertion du dispositif de préparation;
- la figure 6 est une vue en coupe selon la ligne 6-6 de la figure 5 ;
- la figure 7 montre le dispositif de la figure 1 en position insérée sur la platine de la figure 6.

### Description d'un mode de réalisation préférentiel.

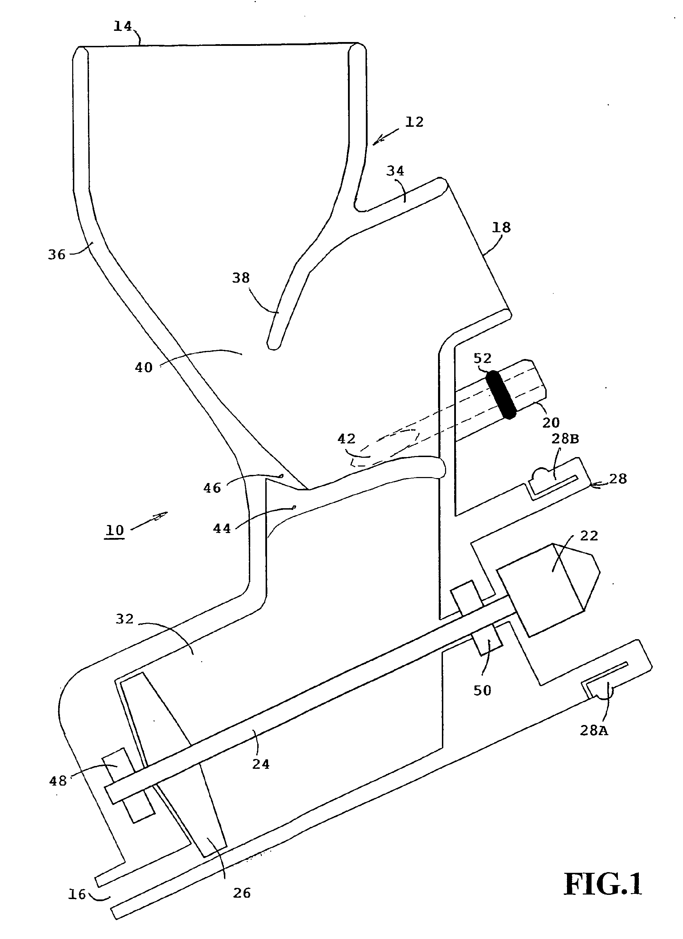

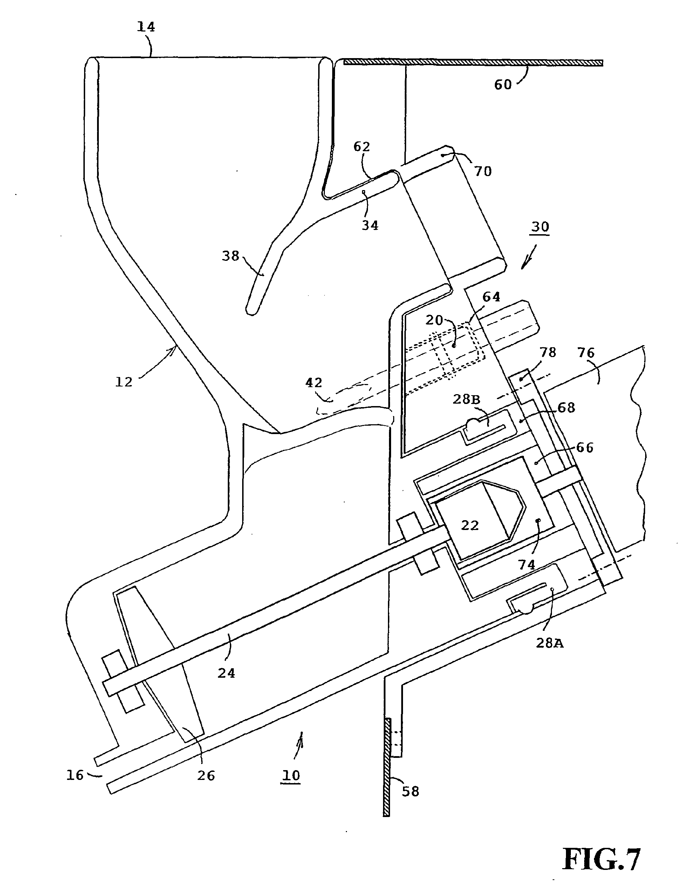

En référence aux figures 1, 2 et 7, un dispositif de préparation 10 d'une boisson comporte une enveloppe 12 destinée au mélange de produits solubles avec un liquide, par exemple de l'eau froide ou chaude. L'enveloppe 12 est formée par un corps monobloc de préférence en matière plastique, comprenant à la partie supérieure un premier orifice 14 d'introduction des produits solubles, et à la partie inférieure un deuxième orifice 16 d'évacuation de la boisson après mélange interne des produits solubles avec l'eau.

Les produits solubles sont injectés dans le premier orifice 14 à l'état pulvérulent et avec un dosage prédéterminé. Ces produits solubles peuvent être du café, du thé, ou tout autre substance lyophilisée ou deshydratée ayant une certaine concentration.

Le deuxième orifice 16 d'évacuation de la boisson est situé à un point bas de la face avant du dispositif de préparation 10. La face arrière à l'opposé du deuxième orifice 16 d'évacuation, est équipée de haut en bas d'un troisième orifice 18 d'extraction des vapeurs, d'un embout 20 de raccordement à l'arrivée d'eau chaude ou froide, d'un élément d'accouplement mécanique 22 d'un axe 24 d'une turbine 26 de mixage à des moyens d'entraînement en rotation, et d'un système de fixation 28 par encliquetage de l'enveloppe 12 sur une platine de montage 30.

L'enveloppe 12 comporte à la base une chambre de mixage 32 ou de mélange en liaison à l'amont avec un conduit d'aspiration 34 pour l'extraction des vapeurs à travers l'orifice 18, et un entonnoir 36 pour la réception des poudres solubles versées dans l'orifice 14 supérieur. L'embout 20 de raccordement pour l'introduction d'eau chaude ou froide est situé entre le conduit d'aspiration 34 et l'élément d'accouplement mécanique 22. Le conduit d'aspiration 34 se trouve à un niveau légèrement inférieur à celui du premier orifice 14 d'introduction des produits solubles, et est prolongé vers l'entonnoir 36 par une paroi 38 intermédiaire qui délimite un passage interne 40 pour la retombée des poudres solubles vers l'entrée de la chambre de mixage 32.

L'embout 20 communique avec l'entrée de la chambre de mixage 32 à travers un trou 42, autorisant l'amenée de l'eau chaude ou froide dans une gorge de circulation 44 délimitée par une lèvre de guidage 46, de manière à canaliser l'eau vers le bas selon un écoulement réparti concentriquement. La lèvre de guidage 46 constitue un col agencé à l'intérieur de l'enveloppe 12 entre le passage 40 et la gorge 44, pour éviter des remontées et éclaboussures d'eau le long des parois du cône de l'entonnoir 36. Le profil concentrique de la gorge de circulation 44 est maximum à son départ sous la lèvre 46, et diminue ensuite progressivement au fur et à mesure de son trajet descendant. La gorge 44 peut s'étendre sur une partie de la périphérie interne de la chambre de mixage 32, ou sur un ou plusieurs tours en fonction de la nature des poudres solubles à mixer.

L'arrivée d'eau s'effectue directement à l'intérieur de la chambre de mixage 32, et la présence de la lèvre de guidage 46 oblige l'eau à former un rideau qui balaye en tournant toute la paroi verticale de la chambre de mixage 32 en entraînant les résidus de poudres solubles par la queue de rinçage.

La turbine 26 est intégrée à demeure au fond de la chambre de mixage 32 au voisinage du deuxième orifice 16 d'évacuation de la boisson. L'axe 24 métallique ou plastique de la turbine 26 est positionné dans des paliers 48, 50 d'étanchéité ménagés dans l'enveloppe 12, et est solidarisé à l'élément mené d'accouplement mécanique 22 à l'extérieur de l'enveloppe 12.

Pour certaines boissons, comme le thé, la présence de la turbine 26 n'est pas nécessaire. Le mélange poudre soluble et eau se fait alors sans centrifugation dans la chambre 32.

Les orifices 14 et 18 présentent des sections circulaires, mais toutes autres formes peuvent être utilisées en fonction de la nature des produits solubles et des vapeurs à extraire. Un joint d'étanchéité 52 torique est placé sur l'embout 20 de raccordement d'eau, et le système de fixation 28 par encliquetage comporte des doigts de retenue 28A, 28B élastiques entourant l'élément mené d'accouplement mécanique 22.

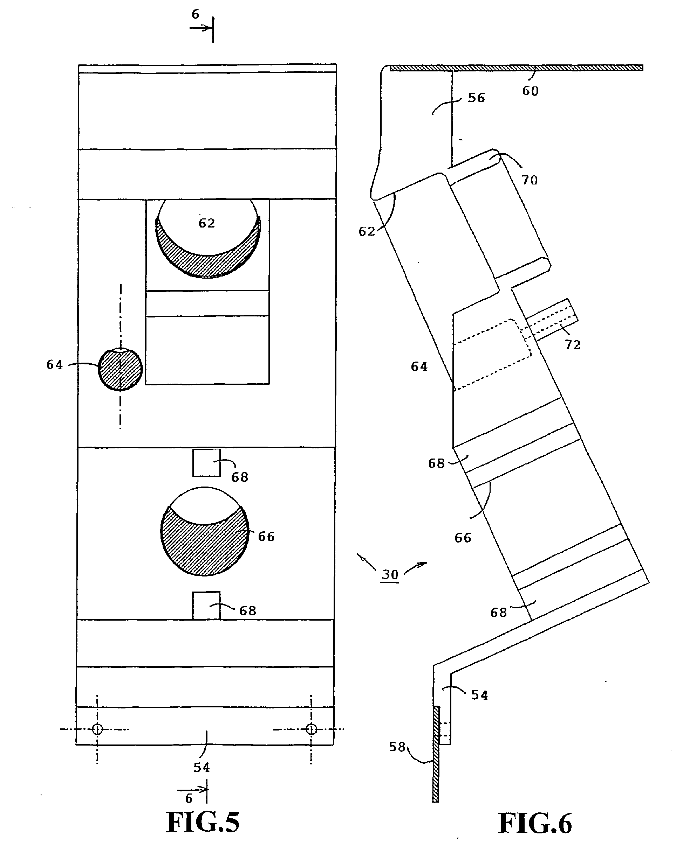

Sur les figures 5 à 7, la platine de montage 30 est constituée par une pièce monobloc en matière plastique moulée ou injectée, ayant une patte de fixation inférieure 54 et une patte de fixation supérieure 56 reliées par des moyens d'assemblage démontables respectivement à une tôle verticale 58 et à une tôle horizontale 60 d'un châssis fixe. L'enveloppe 12 est montée à embrochage sur la platine 30, laquelle intègre tous les embouts de connexion ou de liaison aux produits, fluides, vapeurs et accouplements mécaniques.

La platine 30 est dotée d'une pluralité de trous 62, 64, 66, 68 autorisant l'emboîtement des parties saillantes de formes complémentaires agencées sur la face arrière de l'enveloppe 12. Ainsi, le trou 62 de la platine 30 pour l'insertion du conduit d'aspiration 34, est prolongé à l'arrière par un embout 70 solidaire de la platine 30 permettant de recevoir une tubulure destinée à être reliée à un aspirateur (non représenté) pour l'extraction des vapeurs. Le trou 64 de la platine 30 reçoit l'embout 20 de l'enveloppe 12, et est prolongé à l'arrière par un tube 72 pour une connexion avec un tuyau d'amenée d'eau chaude ou froide. Le trou 66 de la platine 30 permet le passage de l'élément mené 22 d'accouplement mécanique, lequel est emmanché dans l'élément menant 74 pour la liaison du moteur 76 à l'axe 24 de la turbine 26 de mixage. Les deux éléments 22, 74 mâle et femelle comportent des cannelures qui s'emboîtent pour constituer l'accouplement mécanique.

Le moteur 76 de mixage est fixé à l'arrière de la platine 30 par l'intermédiaire d'une plaque d'accrochage 78. Les deux trous 68 de la platine 30 permettent le guidage des doigts de retenue 28A, 28B du système de fixation 28 pour assurer une introduction parfaite des éléments 34, 20, 22 de l'enveloppe 12 dans les trous respectifs 62, 64, 66 de la platine 30.

L'enlèvement de l'enveloppe 12 de la platine de montage 30 fixe s'effectue sans outil en un seul mouvement de dégagement vers l'avant, provoquant l'échappement des doigts de retenue 28A, 28B hors des trous 68, le retrait du conduit d'aspiration 34 et de l'embout 20 hors des trous 62, 64, et la séparation des deux éléments 22, 74 mâle et femelle de l'accouplement mécanique du moteur 76 à la turbine 26. Il en résulte un gain de temps et de manipulation lors de la phase d'entretien et de maintenance de l'appareil.

La remise en place de l'enveloppe 12 sur la platine 30 s'opère en sens inverse, réalisant les différentes connexions fluidiques et mécaniques avec le platine 30 par une simple poussée exercée sur la face avant de l'enveloppe 12.

La face d'appui antérieure de la platine 30 destinée à servir de support à la face arrière de l'enveloppe 12, est inclinée vers l'arrière en faisant un angle aigu avec la tôle horizontale 60. L'inclinaison de la chambre de mixage 32 facilite l'écoulement du liquide vers le point bas du deuxième orifice 16, et empêche le liquide de remonter vers le palier 50 arrière de l'axe 24 de la turbine 26. La lèvre de guidage 46 est positionnée à l'entrée de la chambre de mixage 32 pour canaliser la majorité des vapeurs ascendantes vers le conduit d'aspiration 34 selon une direction sensiblement verticale.

L'arrivée de l'eau chaude ou froide s'effectue à l'entrée de la chambre de mixage 32, et la présence de la lèvre de guidage 46 oblige l'eau à former un rideau qui balaye en tournant toute la paroi verticale de la chambre de mixage 32 en entraînant les résidus de poudres solubles par la queue de rinçage.

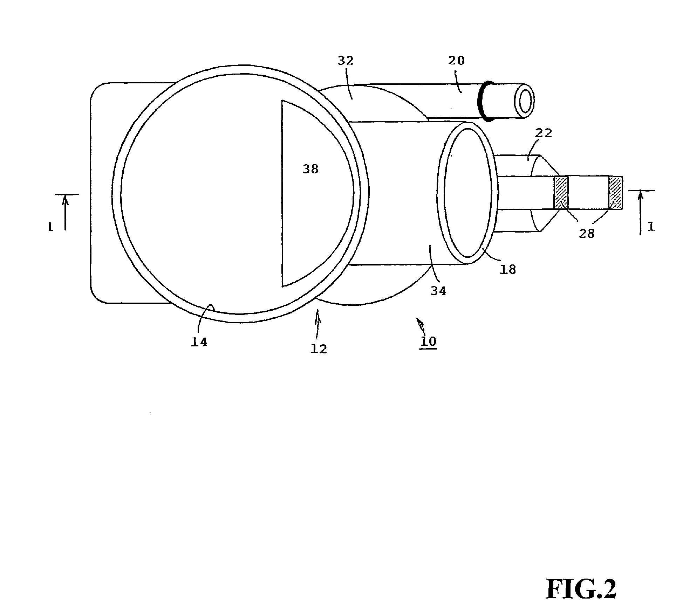

Le dispositif de préparation 10 de la figure 2 est pourvu d'une enveloppe 12 unique avec une seule chambre de mixage destinée pour une boisson prédéterminée.

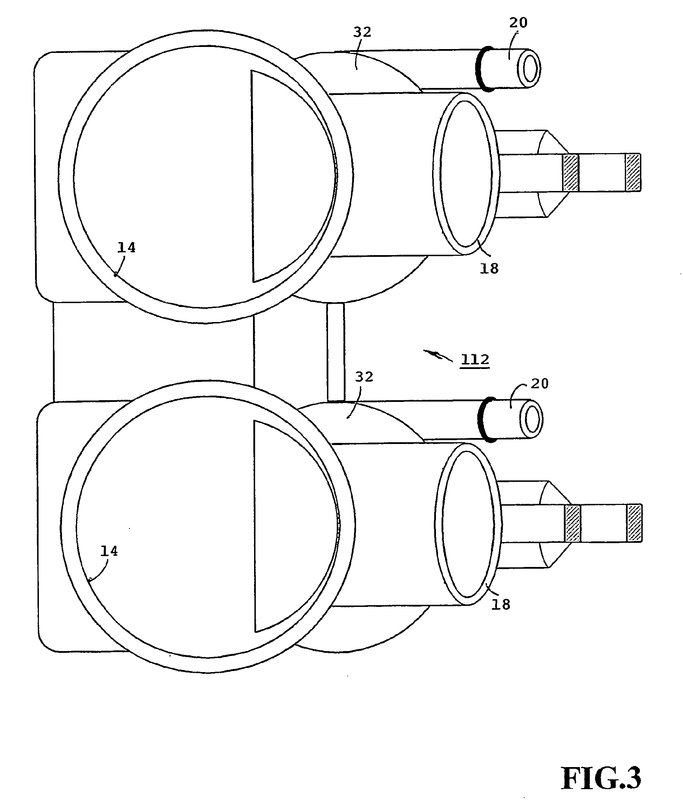

La figure 3 montre une enveloppe 112 double composée de deux modules juxtaposés et de structures identiques à celles de la figure 2.

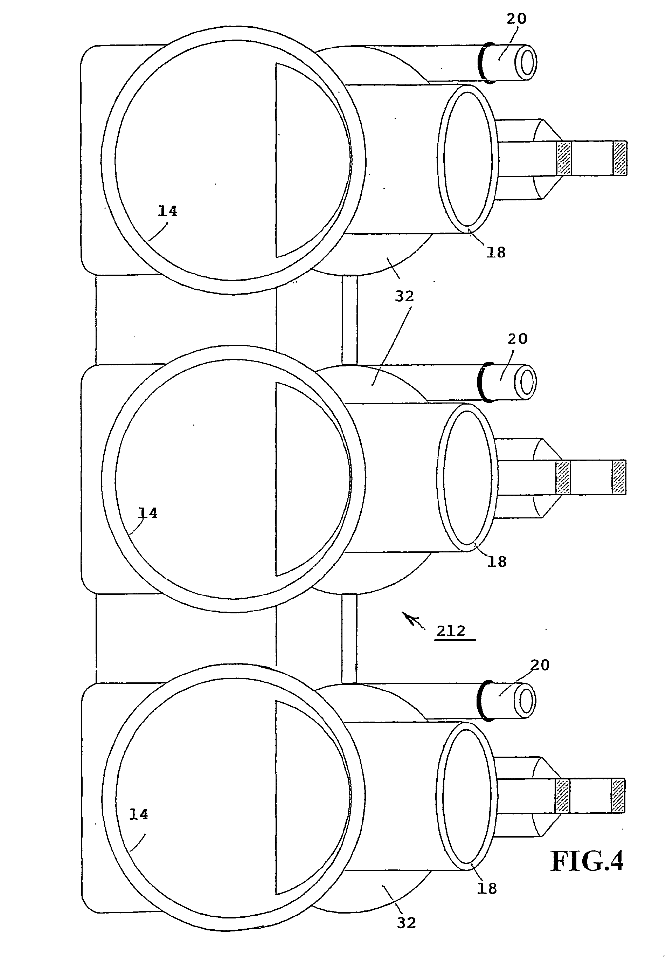

La figure 4 montre une enveloppe 212 triple composée de trois modules juxtaposés et de structures identiques à celles de la figure 2.

## Revendications

1. Dispositif de préparation (10) d'une boisson par mélange de produits solubles avec un liquide, notamment pour un appareil distributeur automatique de boissons, et comprenant une enveloppe (12, 112, 212) ayant :
- un premier orifice (14) d'introduction des produits solubles,
- au moins une chambre de mixage (32) dotée d'un deuxième orifice (16) d'évacuation de la boisson après mélange interne des produits solubles avec le liquide,
- des moyens d'extraction de la vapeur engendrée lors de la phase de mixage avec un liquide chaud,
- et des moyens de raccordement fluidique et mécanique agencés sur la face arrière de l'enveloppe (12, 112, 212), et destinés à être emboîtés dans des trous (62, 64, 66, 68) d'une platine de montage (32) fixe,
**caractérisé en ce que** l'enveloppe (12, 112, 212) est formée par un corps monobloc avec une ou une pluralité de chambres de mixage (32), pour assurer en un seul mouvement de poussée, la connexion automatique des moyens de raccordement fluidique et mécanique à tous les organes d'extraction de vapeurs, d'alimentation du liquide, et d'accouplement mécanique.

2. Dispositif selon la revendication 1, **caractérisé en ce que** les moyens de raccordement mécanique comportent un système de fixation (28) par encliquetage, et un accouplement mécanique (22, 74) à une turbine (26) logée dans la chambre de mixage (32).

3. Dispositif selon l'une des revendications 1 ou 2, **caractérisé en ce que** la platine de montage (30) est constituée par une pièce monobloc en matière plastique, et comporte une face d'appui antérieure inclinée vers l'arrière autorisant d'une part la remontée des vapeurs vers le conduit d'aspiration (34) selon la direction verticale, et facilitant d'autre part l'écoulement du liquide vers la turbine (26) et le point bas du deuxième orifice (16).

4. Dispositif selon l'une des revendications 1 à 3, **caractérisé en ce que** l'arrivée du liquide dans l'enveloppe (12) s'effectue au moyen d'un embout (20) à travers un trou (42) situé à l'entrée de la chambre de mixage (32).

5. Dispositif selon la revendication 4, **caractérisé en ce que** le trou (42) d'alimentation en liquide est agencé au voisinage d'une gorge de circulation (44) délimitée par une lèvre de guidage (46) destinée à canaliser le liquide vers le bas de la chambre de mixage (32) selon un écoulement réparti concentriquement.

6. Dispositif selon la revendication 5, **caractérisé en ce que** le profil de la gorge de circulation (44) diminue progressivement le long de son trajet descendant.

7. Dispositif selon la revendication 4, **caractérisé en ce que** l'embout (20) d'alimentation en liquide est situé entre le conduit d'aspiration (34) et le système de fixation (28) par encliquetage.

8. Dispositif selon la revendication 7, **caractérisé en ce que** le système de fixation (28) comporte deux doigts de retenue (28A, 28B) élastiques destinés à s'engager dans des trous (68) de la platine (30).

9. Dispositif selon la revendication 8, **caractérisé en ce que** les deux doigts de retenue (28A, 28B) entourent l'élément mené de l'accouplement mécanique (22) avec la turbine (26).

## Claims

1. Device (10) for preparing a beverage by mixing soluble products with a liquid, in particular for an automatic drinks distributor, and comprising an enclosure (12, 112, 212)) having:
- a first opening (14) for inserting the soluble products,
- at least one mixing chamber (32) provided with a second opening (16) for removing the beverage after the soluble products have been mixed internally with the liquid,
- means for removing the steam generated in the phase of mixing with a hot liquid,
- and fluidic and mechanical connecting means arranged on the rear face of the enclosure (12, 112, 212) and designed to be engaged in holes (62, 64, 66, 68) of a fixed mounting plate (30),
**characterized in that** the enclosure (12, 112, 212) is formed by a monoblock body with one or a plurality of mixing chambers (32) to perform, in a single pushing movement, automatic connection of the fluidic and mechanical connecting means with all the steam removal, liquid feed, and mechanical coupling elements.

2. Device according to claim 1, **characterized in that** the mechanical connecting means comprise a fixing system (28) by clipping, and a mechanical coupling (22, 74) with a turbine (26) housed in the mixing chamber (32).

3. Device according to one of the claims 1 or 2, **characterized in that** the mounting plate (30) is formed by a monoblock part made of plastic and comprises a backwardly-inclined front bearing surface both allowing the steam to rise up in a vertical direction in the direction of the suction duct (34) and also facilitating flow of the liquid to the turbine (26) and the bottom point of the second opening (16).

4. Device according to one of the claims 1 to 3, **characterized in that** inlet of the liquid to the enclosure (12) is performed by means of an end-piece (20) through a hole (42) situated at the inlet of the mixing chamber (32).

5. Device according to claim 4, **characterized in that** the liquid feed hole (42) is arranged near a circulation groove (44) delineated by a guide lip (46) designed to channel the liquid to the bottom of the mixing chamber (32) with a concentrically distributed flow.

6. Device according to claim 5, **characterized in that** the profile of the circulation groove (44) decreases progressively along the descending path thereof.

7. Device according to claim 4, **characterized in that** the liquid feed end-piece (20) is situated between the suction duct (34) and the fixing system (28) by clipping.

8. Device according to claim 4, **characterized in that** the fixing system (28) comprises two flexible retaining fingers (28A, 28B) designed to engage in holes (68) of the mounting plate (30).

9. Device according to claim 8, **characterized in that** the two retaining fingers (28A, 28B) surround the driven element of the mechanical coupling (22) with the turbine (26).

## Patentansprüche

1. Vorrichtung zum Zubereiten (10) eines Getränks durch Mischen löslicher Produkte mit einer Flüssigkeit, insbesondere für einen Flaschen-Ausgabeautomaten, und die ein Gehäuse (12, 112, 212) aufweist, das umfasst:
- eine erste Öffnung (14) zum Zuführen der löslichen Produkte,
- mindestens eine Mischkammer (32), die über eine zweite Öffnung (16) zum Abgeben des Getränks nach dem internen Mischen der löslichen Produkte mit der Flüssigkeit verfügt,
- Mittel zum Abzug des während des Vorgangs des Mischens mit einer heißen Flüssigkeit entstandenen Dampfs,
- und Mittel zur Fluid- und mechanischen Verbindung, die an der Rückseite des Gehäuses (12, 112, 212) angeordnet und dazu bestimmt sind, in Öffnungen (62, 64, 66, 68) einer festen Montageplatte (30) gesteckt zu werden,
**dadurch gekennzeichnet, dass** das Gehäuse (12, 112, 212) von einer Einfassung gebildet wird, die einstückig verbunden ist mit einer oder mehreren Mischkammern (32), um mit einer einzigen Druckbewegung die automatische Verbindung der Fluid- und mechanischen Verbindungsmittel mit allen Einrichtungen zum Dampfabzug, zur Flüssigkeitszufuhr und zur mechanischen Verbindung herzustellen.

2. Vorrichtung nach Anspruch 1, **dadurch gekennzeichnet, dass** die mechanischen Verbindungsmittel ein Einrast-Befestigungssystem (28) und eine mechanische Verbindung (22, 74) mit einer Turbine (26) umfassen, die sich in der Mischkammer (32) befindet.

3. Vorrichtung nach einem der Ansprüche 1 oder 2, **dadurch gekennzeichnet, dass** die Montageplatte (30) von einem einstückigen Element aus Kunststoff gebildet wird und eine vordere Anlagefläche aufweist, die nach hinten geneigt ist und einerseits das Aufsteigen der Dämpfe zur Ansaugleitung (34) in vertikaler Richtung ermöglicht und andererseits das Strömen der Flüssigkeit zur Turbine (26) und zum tiefen Punkt der zweiten Öffnung (16) erleichtert.

4. Vorrichtung nach einem der Ansprüche 1 bis 3, **dadurch gekennzeichnet, dass** die Flüssigkeit dem Gehäuse (12) über ein Ansatzstück (20) durch eine Öffnung (42) zugeführt wird, die sich am Eingang zur Mischkammer (32) befindet.

5. Vorrichtung nach Anspruch 4, **dadurch gekennzeichnet, dass** die Öffnung (42) zur Flüssigkeitszufuhr nahe einer Strömungsrinne (44) angeordnet ist, die von einer Führungslippe (46) begrenzt wird, die die Flüssigkeit in konzentrisch verteiltem Strom zum unteren Bereich der Mischkammer (32) leiten soll.

6. Vorrichtung nach Anspruch 5, **dadurch gekennzeichnet, dass** das Profil der Strömungsrinne (44) entlang ihres abfallenden Wegs allmählich kleiner wird.

7. Vorrichtung nach Anspruch 4, **dadurch gekennzeichnet, dass** das Ansatzstück (20) für die Flüssigkeitszufuhr zwischen der Ansaugleitung (34) und dem Einrast- Befestigungssystem (28) angeordnet ist.

8. Vorrichtung nach Anspruch 7, **dadurch gekennzeichnet, dass** das Befestigungssystem (28) zwei elastische Rückhaltefinger (28A, 28B) umfasst, die in Öffnungen (68) der Platte (30) greifen sollen.

9. Vorrichtung nach Anspruch 8, **dadurch gekennzeichnet, dass** die beiden Rückhaltefinger (28A, 28B) das Abtriebselement der mechanischen Verbindung (22) mit der Turbine (26) umschließen.
